# EUROPEAN PATENT APPLICATION

(11) **EP 4 410 918 A1**
(43) Date of publication of application: **07.08.2024**
(21) Application number: 22876348.8
(22) Date of filing: 28.09.2022
(51) Int. Cl.: C09J 11/06, C09J 11/08, C09J 109/06, C09J 123/00, C09J 123/04, C09J 123/10, C09J 123/20, C09J 125/04, C09J 125/10, C09J 153/02, C09J 7/38

(54) **HOT MELT ADHESIVE COMPOSITION AND ADHESIVE TAPE USING SAID HOT MELT ADHESIVE COMPOSITION**

(30) Priority: 29.09.2021 JP 2021158889
(71) Applicant: Nitto Denko Corporation, Ibaraki-shi, Osaka 567-8680 (JP)
(72) Inventor: UCHIDA Sho, Ibaraki-shi, Osaka 567-8680 (JP); TAKEDA Kohei, Ibaraki-shi, Osaka 567-8680 (JP); IKISHIMA Shinsuke, Ibaraki-shi, Osaka 567-8680 (JP)
(74) Representative: Müller-Boré & Partner Patentanwälte PartG mbB
(86) International application number: PCT/JP2022/036201
(87) International publication number: WO 2023/054482

(57) **Abstract**

Provided are a pressure-sensitive adhesive composition that has a sufficient initial pressure-sensitive adhesive strength and can achieve both a resealing property and an easy unsealing property, and a pressure-sensitive adhesive tape using the pressure-sensitive adhesive composition. A hot-melt pressure-sensitive adhesive composition according to an embodiment of the present invention includes a styrene-based elastomer, an olefin-based elastomer, and a tackifier. The hot-melt pressure-sensitive adhesive composition includes 2 wt% to 80 wt% of the styrene-based elastomer, 2 wt% to 50 wt% of the olefin-based elastomer, and 2 wt% to 40 wt% of the tackifier.

## Description

### Technical Field

The present invention relates to a hot-melt pressure-sensitive adhesive composition and to a pressure-sensitive adhesive tape using the hot-melt pressure-sensitive adhesive composition.

### Background Art

There has been known a packaging container, such as a bag, having a fastener attached to an opening portion thereof so that the packaging container can be resealed after part of contents such as food and a detergent is taken out. The process of attaching a fastener to a bag is complicated, and the production cost of such bag is high. Thus, a bag having a resealing function has been investigated in place of the bag having a fastener attached thereto. As the bag having a resealing function, a bag including a resealing portion has been proposed (e.g., Patent Literature 1).

In addition, there has been known a method including fixing an unsealing portion through use of a pressure-sensitive adhesive tape so that the unsealing portion is not opened when a packaging container is resealed. The pressure-sensitive adhesive tape to be used for resealing is required to have a resealing property and an easy unsealing property. However, even when the pressure-sensitive adhesive tape has suitable pressure-sensitive adhesive characteristics at the time of its production, the pressure-sensitive adhesive strength thereof increases with time, and the packaging container may be damaged at the time of unsealing. Such tendency may become conspicuous in a packaging material subjected to printing and surface processing. In addition, when the pressure-sensitive adhesive strength is adjusted in consideration of an increase in pressure-sensitive adhesive strength with time, a sufficient pressure-sensitive adhesive strength may not be exhibited in a production stage of a packaging container. Thus, there is a demand for a pressure-sensitive adhesive composition that has a sufficient initial pressure-sensitive adhesive strength and can achieve both a resealing property and an easy unsealing property.

### Citation List

### Patent Literature

[PTL 1] JP 2014-15244 A

### Summary of Invention

### Technical Problem

The present invention has been made to solve the above-mentioned problems of the related art, and an object of the present invention is to provide a pressure-sensitive adhesive composition that has a sufficient initial pressure-sensitive adhesive strength and can achieve both a resealing property and an easy unsealing property, and a pressure-sensitive adhesive tape using the pressure-sensitive adhesive composition.

### Solution to Problem

According to an embodiment of the present invention, there is provided a hot-melt pressure-sensitive adhesive composition, including a styrene-based elastomer, an olefin-based elastomer, and a tackifier. The hot-melt pressure-sensitive adhesive composition includes 2 wt% to 80 wt% of the styrene-based elastomer, 2 wt% to 50 wt% of the olefin-based elastomer, and 2 wt% to 40 wt% of the tackifier.

In one embodiment, the hot-melt pressure-sensitive adhesive composition includes 5 wt% to 40 wt% of the olefin-based elastomer.

In one embodiment, the olefin-based elastomer contains an α-olefin-based elastomer.

In one embodiment, the α-olefin-based elastomer contains at least one kind selected from an ethylene-based elastomer, a propylene-based elastomer, and a 1-butene-based elastomer.

In one embodiment, the α-olefin-based elastomer is the propylene-based elastomer.

In one embodiment, the α-olefin-based elastomer has a softening point of less than 100°C.

In one embodiment, the styrene-based elastomer has a styrene content of from 10 wt% to 25 wt%.

In one embodiment, the styrene-based elastomer contains a styrene-isoprene block copolymer.

In one embodiment, the styrene-isoprene block copolymer contains a diblock copolymer.

In one embodiment, the styrene-isoprene block copolymer contains 5 wt% to 70 wt% of the diblock copolymer.

In one embodiment, the hot-melt pressure-sensitive adhesive composition includes 4 wt% to 30 wt% of the tackifier.

In one embodiment, the tackifier is a hydrogenated petroleum resin.

In one embodiment, the hot-melt pressure-sensitive adhesive composition further includes an oil.

In one embodiment, the hot-melt pressure-sensitive adhesive composition includes 5 wt% to 30 wt% of the oil.

In one embodiment, the hot-melt pressure-sensitive adhesive composition has a viscosity at 160°C of less than 50,000 mPa·s.

According to another aspect of the present invention, there is provided a pressure-sensitive adhesive tape. The pressure-sensitive adhesive tape includes a base material and a pressure-sensitive adhesive layer containing the hot-melt pressure-sensitive adhesive composition. The pressure-sensitive adhesive layer has a thickness of from 10 µm to 100 µm.

In one embodiment, the pressure-sensitive adhesive tape has an initial pressure-sensitive adhesive strength AF₀ of from 0.1 N/10 mm to 5.0 N/10 mm and a pressure-sensitive adhesive strength after storage AFₛ of from 0.1 N/10 mm to 5.0 N/10 mm.

In one embodiment, the pressure-sensitive adhesive tape is used as a sealing material for resealing.

In one embodiment, the pressure-sensitive adhesive tape is used for a packaging material including a printed portion.

### Advantageous Effects of Invention

According to the present invention, the pressure-sensitive adhesive composition that has a sufficient initial pressure-sensitive adhesive strength and can achieve both a resealing property and an easy unsealing property, and the pressure-sensitive adhesive tape using the pressure-sensitive adhesive composition can be provided.

### Brief Description of Drawings

FIG. **1A** is a schematic sectional view of a pressure-sensitive adhesive tape according to one embodiment of the present invention.
FIG. **1B** is a schematic sectional view of a pressure-sensitive adhesive tape according to another embodiment of the present invention.
FIG. **2** is a schematic sectional view for illustrating a usage mode of the pressure-sensitive adhesive tape illustrated in FIG. **1B****.**

### Description of Embodiments

### A. Hot-melt Pressure-sensitive Adhesive Composition

A hot-melt pressure-sensitive adhesive composition according to an embodiment of the present invention contains a styrene-based elastomer, an olefin-based elastomer, and a tackifier. The hot-melt pressure-sensitive adhesive composition contains 2 wt% to 80 wt% of the styrene-based elastomer, 2 wt% to 50 wt% of the olefin-based elastomer, and 2 wt% to 40 wt% of the tackifier with respect to 100 wt% of the hot-melt pressure-sensitive adhesive composition. Because of such composition, there can be provided a pressure-sensitive adhesive composition that has a sufficient initial pressure-sensitive adhesive strength and can achieve both a resealing property and an easy unsealing property. When a packaging material serving as an adherend is subjected to surface processing and when the packaging material has a printed surface, the physical properties (in particular, pressure-sensitive adhesive strength) of the pressure-sensitive adhesive composition may be changed. The hot-melt pressure-sensitive adhesive composition according to the embodiment of the present invention can achieve both the resealing property and the easy unsealing property even when the composition is bonded to a packaging material having a printed surface.

The hot-melt pressure-sensitive adhesive composition has a viscosity at 160°C of preferably less than 50,000 mPa·s, more preferably 40,000 mPa·s or less, still more preferably 30,000 mPa·s or less. The hot-melt pressure-sensitive adhesive composition has a viscosity at 160°C of preferably 1,000 mPa·s or more. When the viscosity at 160°C falls within the above-mentioned ranges, the applicability of the hot-melt pressure-sensitive adhesive composition is improved, and the productivity of a pressure-sensitive adhesive tape using the hot-melt pressure-sensitive adhesive composition can be improved. As used herein, the viscosity of the hot-melt pressure-sensitive adhesive composition refers to a viscosity measured with a viscometer (for example, Model: DVE Viscometer, spindle: LV, manufactured by AMETEK Brookfield).

The hot-melt pressure-sensitive adhesive composition has a loss elastic modulus E" of preferably 356×10⁴ Pa or less, more preferably 100×10⁴ Pa or less, still more preferably 50×10⁴ Pa or less. In addition, the hot-melt pressure-sensitive adhesive composition has a loss elastic modulus E" of 10×10⁴ Pa or more. When the loss elastic modulus E" falls within the above-mentioned ranges, there can be provided a hot-melt pressure-sensitive adhesive composition that has a sufficient initial pressure-sensitive adhesive strength and can achieve both a resealing property and an easy unsealing property. The loss elastic modulus E" may be measured with, for example, a nanoindenter.

### A-1. Styrene-based Elastomer

The hot-melt pressure-sensitive adhesive composition contains 2 wt% to 80 wt% of a styrene-based elastomer with respect to 100 wt% of the composition. The hot-melt pressure-sensitive adhesive composition contains preferably 10 wt% to 75 wt%, more preferably 20 wt% to 75 wt%, still more preferably 30 wt% to 70 wt%, particularly preferably 40 wt% to 65 wt% of the styrene-based elastomer. When the content of the styrene-based elastomer falls within the above-mentioned ranges, there can be provided a pressure-sensitive adhesive composition that has a sufficient initial pressure-sensitive adhesive strength and can achieve both a resealing property and an easy unsealing property.

The styrene content of the styrene-based elastomer may be set to any appropriate value. The styrene content of the styrene-based elastomer is preferably 10 wt% or more, more preferably 12 wt% or more, still more preferably 14 wt% or more. When the styrene content of the styrene-based elastomer is less than 10 wt%, the initial pressure-sensitive adhesive strength may become excessively high, and an adhesive residue may occur at the time of peeling. The styrene content of the styrene-based elastomer is preferably 25 wt% or less, more preferably 20 wt% or less, still more preferably 18 wt% or less. When the styrene content of the styrene-based elastomer is more than 25 wt%, the pressure-sensitive adhesive strength is increased with time, and the easy unsealing property may not be obtained. In addition, an adherend such as a packaging material may be damaged.

The melt flow rate (MFR) of the styrene-based elastomer is preferably from 5 g/10 min to 40 g/10 min, more preferably from 10 g/10 min to 30 g/10 min, still more preferably from 20 g/10 min to 30 g/10 min. When the MFR falls within the above-mentioned ranges, the applicability of the hot-melt pressure-sensitive adhesive composition can be improved. The term "MFR" as used herein refers to a value measured by the method described in ISO 1133 under the conditions of 200°C and 5 kg.

Any appropriate elastomer may be used as the styrene-based elastomer. Examples thereof include a styrene-isoprene block copolymer (SIS), a styrene-butadiene block copolymer (SBS), a styrene-ethylene-butylene block copolymer (SEES), a styrene-ethylene-propylene block copolymer (SEPS), a styrene-ethylene-ethylene-propylene block copolymer (SEEPS), and a styrene-butadiene-butene-styrene block copolymer (SBBS). Those styrene-based elastomers may be used alone or in combination thereof. Of those, a styrene-isoprene block copolymer (hereinafter also referred to as "SIS") may be preferably used.

The SIS preferably contains a diblock copolymer. When the SIS contains the diblock copolymer, the initial pressure-sensitive adhesive strength can be adjusted to an appropriate value, and the wettability of the hot-melt pressure-sensitive adhesive composition can also be improved.

The content ratio of the SIS diblock copolymer in the SIS is preferably 5 wt% or more, more preferably 10 wt% or more, still more preferably 30 wt% or more. When the content ratio of the SIS diblock copolymer falls within the above-mentioned ranges, the initial pressure-sensitive adhesive strength can be adjusted to an appropriate value, and the wettability of the hot-melt pressure-sensitive adhesive composition can also be improved. The content ratio of the SIS diblock copolymer in the SIS is preferably 80 wt% or less, more preferably 50 wt% or less, still more preferably 40 wt% or less, most preferably 35 wt% or less. When the content ratio of the SIS diblock copolymer falls within the above-mentioned ranges, an adhesive residue on an adherend can be prevented.

### A-2. Olefin-based Elastomer

The hot-melt pressure-sensitive adhesive composition contains 2 wt% to 50 wt% of an olefin-based elastomer. The content ratio of the olefin-based elastomer is preferably 5 wt% or more, more preferably 10 wt% or more, still more preferably 15 wt% or more, particularly preferably 20 wt% or more. When the content ratio of the olefin-based elastomer falls within the above-mentioned ranges, there can be provided a pressure-sensitive adhesive composition that can achieve both a resealing property and an easy unsealing property. The content ratio of the olefin-based elastomer is preferably 40 wt% or less, more preferably 35 wt% or less, still more preferably 30 wt% or less. When the content ratio of the olefin-based elastomer falls within the above-mentioned ranges, the initial pressure-sensitive adhesive strength can be adjusted to an appropriate value.

The density of the olefin-based elastomer is preferably 0.830 g/cm³ or more, more preferably 0.835 g/cm³ or more, still more preferably 0.840 g/cm³ or more, particularly preferably 0.845 g/cm³ or more. In addition, the density of the olefin-based elastomer is preferably 0.890 g/cm³ or less, more preferably 0.885 g/cm³ or less, still more preferably 0.880 g/cm³ or less, particularly preferably 0.875 g/cm³ or less. When the density of the olefin-based elastomer falls within the above-mentioned ranges, there can be provided a pressure-sensitive adhesive composition that can achieve both a resealing property and an easy unsealing property.

The viscosity of the olefin-based elastomer at 190°C is preferably from 1,500 mPa·s to 6,500 mPa·s, more preferably from 2,000 mPa·s to 6,000 mPa·s, still more preferably from 3,000 mPa·s to 5,000 mPa·s. When the viscosity of the olefin-based elastomer falls within the above-mentioned ranges, a composition to be obtained can be suitably used as the hot-melt pressure-sensitive adhesive composition.

Any appropriate olefin-based elastomer may be used as the olefin-based elastomer. An α-olefin-based elastomer may be preferably used. A specific example of the α-olefin-based elastomer is at least one kind of elastomer selected from an ethylene-based elastomer, a propylene-based elastomer, and a 1-butene-based elastomer. The olefin-based elastomer may be a homopolymer of the α-olefin-based elastomer, a copolymer of two or more kinds of the α-olefin-based elastomers, or a copolymer of the α-olefin-based elastomer and another monomer component. The olefin-based elastomers may be used alone or in combination thereof. Of those, a propylene-based elastomer is preferred. Through use of the propylene-based elastomer, the heating stability of the hot-melt pressure-sensitive adhesive composition can be improved. The terms "ethylene-based elastomer," "propylene-based elastomer," and "1-butene-based elastomer" as used herein refer to elastomers containing, as main components, ethylene, propylene, and 1-butene, respectively. The term "main component" as used herein refers to a monomer component having the highest ratio among components for forming an elastomer.

In one embodiment, the propylene-based elastomer contains a copolymer of propylene and ethylene. When the propylene-based elastomer contains the copolymer of propylene and ethylene, the initial pressure-sensitive adhesive strength of a pressure-sensitive adhesive layer formed of the hot-melt pressure-sensitive adhesive composition can be adjusted to an appropriate value. When the copolymer of propylene and ethylene is used as the propylene-based elastomer, the content ratio of ethylene in the propylene-based elastomer is preferably from 5 wt% to 20 wt%, more preferably from 7 wt% to 15 wt%. When the content ratio of ethylene in the propylene-based elastomer falls within the above-mentioned ranges, there can be provided a pressure-sensitive adhesive composition that can achieve both a resealing property and an easy unsealing property.

The softening point of the α-olefin-based elastomer is preferably less than 100°C, more preferably 98°C or less, still more preferably 96°C or less. The softening point is, for example, 30°C or more. When the softening point falls within the above-mentioned ranges, a composition to be obtained can be suitably used as the hot-melt pressure-sensitive adhesive composition.

### A-3. Tackifier

The hot-melt pressure-sensitive adhesive composition contains 2 wt% to 40 wt% of a tackifier. The hot-melt pressure-sensitive adhesive composition contains preferably 30 wt% or less, more preferably 20 wt% or less, still more preferably 10 wt% or less, particularly preferably 8 wt% or less of the tackifier. When the content of the tackifier falls within the above-mentioned ranges, there can be provided a pressure-sensitive adhesive composition that has a sufficient initial pressure-sensitive adhesive strength and can achieve both a resealing property and an easy unsealing property. When the content of the tackifier is more than 40 wt%, an adhesive residue may occur on an adherend. In addition, the adherend may be damaged at the time of peeling, and the easy unsealing property may be lowered. The hot-melt pressure-sensitive adhesive composition contains preferably 4 wt% or more, more preferably 6 wt% or more of the tackifier. When the content of the tackifier falls within the above-mentioned ranges, there can be obtained a hot-melt pressure-sensitive adhesive composition having an appropriate pressure-sensitive adhesive strength to an adherend.

Any appropriate resin may be used as the tackifier. Specific examples of thereof include: a natural resin, such as a terpene-based resin or a rosin resin; and a synthetic resin, such as a petroleum resin, a hydrogenated petroleum resin, a styrene-based resin, a coumarone-indene-based resin, a phenol-based resin, or a xylene-based resin. Examples of the petroleum resin include an aliphatic petroleum resin, an alicyclic petroleum resin, an aromatic petroleum resin, a copolymer petroleum resin of an alicyclic component and an aromatic component, and a copolymer petroleum resin of an alicyclic component and an aliphatic component. Of those, a hydrogenated petroleum resin is preferably used. Through use of the hydrogenated petroleum resin, the compatibility with the α-olefin-based elastomer is improved, and as a result, the heating stability of the hot-melt pressure-sensitive adhesive composition can be improved. The tackifiers may be used alone or in combination thereof.

### A-4. Oil

The hot-melt pressure-sensitive adhesive composition preferably further contains an oil. When the hot-melt pressure-sensitive adhesive composition contains the oil, its wettability can be improved. Any appropriate oil may be used as the oil. Examples thereof include a process oil, a naphthenic oil, a paraffinic oil, and a vulcanized oil. Of those, a paraffinic oil may be preferably used. The oils may be used alone or in combination thereof.

The oil may be used in any appropriate amount. The hot-melt pressure-sensitive adhesive composition contains preferably 5 wt% to 30 wt% of the oil. The hot-melt pressure-sensitive adhesive composition contains more preferably 25 wt% or less, still more preferably 20 wt% or less of the oil. When the content ratio of the oil is high, an adhesive residue may occur on an adherend. The hot-melt pressure-sensitive adhesive composition contains more preferably 5 wt% or more, still more preferably 10 wt% or more, particularly preferably 15 wt% or more of the oil. When the content ratio of the oil falls within the above-mentioned ranges, there can be obtained a hot-melt pressure-sensitive adhesive composition excellent in wettability.

### A-5. Other Additive

The hot-melt pressure-sensitive adhesive composition may further contain any appropriate other additive as required. Examples of the additives include an antioxidant, a UV absorber, a light stabilizer, a fluorescence agent, and a colorant. Those additives may be used alone or in combination thereof. The other additive is used in any appropriate amount within the range in which the effects of the present invention are obtained and a total of the other additive and the above-mentioned styrene-based elastomer, olefin-based elastomer, tackifier, and any appropriate oil becomes 100 wt%.

In one embodiment, the above-mentioned hot-melt pressure-sensitive adhesive composition is substantially free of vaseline. When the hot-melt pressure-sensitive adhesive composition contains vaseline, the workability in preparation operation of the pressure-sensitive adhesive composition may be lowered because vaseline has semiliquid characteristics. In addition, crystalline components in vaseline may lower the wettability and stability of the pressure-sensitive adhesive composition. When the hot-melt pressure-sensitive adhesive composition is substantially free of vaseline, its initial pressure-sensitive adhesive strength can be stably adjusted to an appropriate value. In addition, the wettability of the hot-melt pressure-sensitive adhesive composition can be improved. Further, the workability in preparation operation of the hot-melt pressure-sensitive adhesive composition can be improved. In one embodiment, the above-mentioned hot-melt pressure-sensitive adhesive composition is substantially free of ethylene-vinyl acetate. When the hot-melt pressure-sensitive adhesive composition contains ethylene-vinyl acetate, the heating stability of the hot-melt pressure-sensitive adhesive may be lowered. In addition, a hot-melt pressure-sensitive adhesive composition to be obtained may have an odor peculiar to vinyl acetate. When the hot-melt pressure-sensitive adhesive composition is substantially free of ethylene-vinyl acetate, its heating stability is improved, and a hot-melt pressure-sensitive adhesive composition with less odor can be provided.

### B. Pressure-sensitive Adhesive Tape

In one embodiment of the present invention, a pressure-sensitive adhesive tape is provided. The pressure-sensitive adhesive tape includes a base material and a pressure-sensitive adhesive layer. The pressure-sensitive adhesive layer is formed through use of the above-mentioned hot-melt pressure-sensitive adhesive composition. The hot-melt pressure-sensitive adhesive composition has a sufficient initial pressure-sensitive adhesive strength and can achieve both a resealing property and an easy unsealing property. Thus, the pressure-sensitive adhesive tape can also be suitably used as a sealing material for resealing of packaging materials for foodstuffs, sanitary goods, detergents, and the like.

The pressure-sensitive adhesive tape may be set to any appropriate thickness. The thickness thereof is, for example, from 20 um to 200 um, preferably from 20 um to 130 um. When the thickness of the pressure-sensitive adhesive tape falls within the above-mentioned ranges, the pressure-sensitive adhesive tape can be suitably used as a sealing material for resealing.

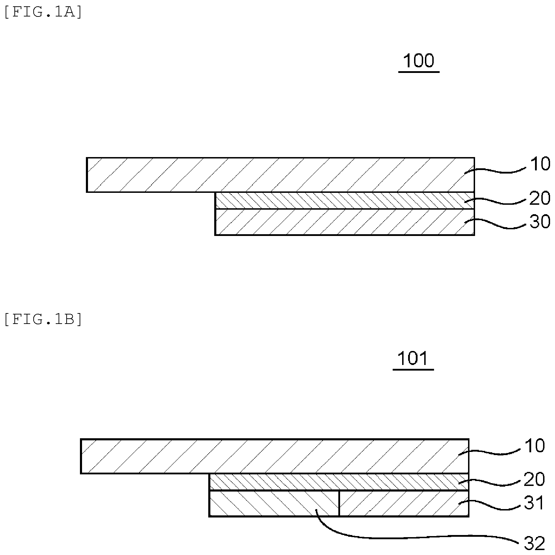

The pressure-sensitive adhesive layer may be formed on the entirety of one surface of the base material or may be formed only on a part thereof. FIG. **1A** and FIG. **1B** are each a schematic sectional view of a pressure-sensitive adhesive tape according to one embodiment of the present invention. A pressure-sensitive adhesive tape **100** illustrated in FIG. **1A** includes a base material **10,** an undercoat layer **20,** and a pressure-sensitive adhesive layer **30.** In the illustrated example, the pressure-sensitive adhesive layer **30** is formed on one end portion of the base material. A portion of the base material **10** on which the undercoat layer **20** and the pressure-sensitive adhesive layer **30** are not formed may be used as a grip portion when the pressure-sensitive adhesive tape **100** is used.

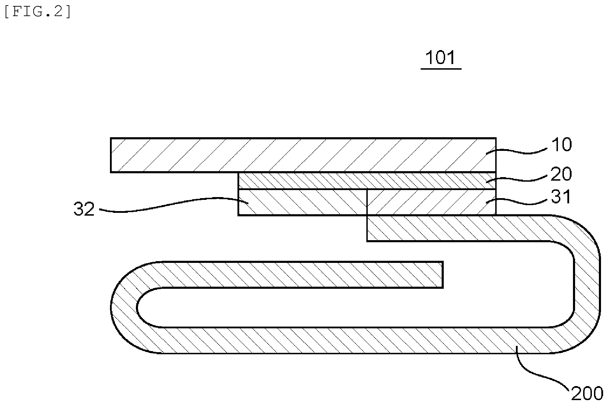

In one embodiment, the pressure-sensitive adhesive tape includes a pressure-sensitive adhesive layer formed of the above-mentioned hot-melt pressure-sensitive adhesive composition and a pressure-sensitive adhesive layer formed of another pressure-sensitive adhesive. A pressure-sensitive adhesive tape **101** illustrated in FIG. **1B** includes the base material **10,** the undercoat layer **20,** a pressure-sensitive adhesive layer **31** formed of another pressure-sensitive adhesive, and a pressure-sensitive adhesive layer **32** formed of the above-mentioned hot-melt pressure-sensitive adhesive composition. FIG. **2** is a schematic sectional view for illustrating a usage mode of the pressure-sensitive adhesive tape of the embodiment of the present invention. In the illustrated example, there is illustrated a mode in which the pressure-sensitive adhesive tape **101** is used as a sealing material for resealing on an adherend **200.** In the illustrated example, the pressure-sensitive adhesive tape **101** is fixed to the adherend **200** via the pressure-sensitive adhesive layer **31** formed of another pressure-sensitive adhesive, and the pressure-sensitive adhesive layer **32** formed of the above-mentioned hot-melt pressure-sensitive adhesive composition is bonded to the adherend **200** to reseal the adherend **200.** The above-mentioned hot-melt pressure-sensitive adhesive composition can achieve both a resealing property and an easy unsealing property. Thus, when the pressure-sensitive adhesive tape **101** is used as a sealing material for resealing, both the sealing property of the adherend **200** and the easy unsealing property thereof at the time of unsealing can be achieved.

In this embodiment, the pressure-sensitive adhesive layer **31** is not peeled from the adherend **200.** Thus, any appropriate pressure-sensitive adhesive having a high pressure-sensitive adhesive strength (having no easy unsealing property) may be adopted instead of the above-mentioned hot-melt pressure-sensitive adhesive composition. Examples of the pressure-sensitive adhesive for forming the pressure-sensitive adhesive layer **31** include a rubber-based pressure-sensitive adhesive, an acrylic pressure-sensitive adhesive, a silicone-based pressure-sensitive adhesive, a urethane-based pressure-sensitive adhesive, a vinyl alkyl ether-based pressure-sensitive adhesive, a polyvinyl alcohol-based pressure-sensitive adhesive, a polyvinyl pyrrolidone-based pressure-sensitive adhesive, a polyacrylamide-based pressure-sensitive adhesive, and a cellulose-based pressure-sensitive adhesive.

The pressure-sensitive adhesive tape preferably has an initial pressure-sensitive adhesive strength AF₀ of from 0.1 N/10 mm to 5.0 N/10 mm and a pressure-sensitive adhesive strength after storage AFₛ of from 0.1 N/10 mm to 5.0 N/10 mm. When both the initial pressure-sensitive adhesive strength AF₀ and the pressure-sensitive adhesive strength after storage AFₛ fall within the above-mentioned ranges, there can be obtained a pressure-sensitive adhesive composition that has a sufficient initial pressure-sensitive adhesive strength and can achieve both a resealing property and an easy unsealing property. The initial pressure-sensitive adhesive strength AF₀ is more preferably from 0.1 N/10 mm to 4.0 N/10 mm, still more preferably from 0.1 N/10 mm to 3.0 N/10 mm. In addition, the pressure-sensitive adhesive strength after storage AFₛ is more preferably from 0.1 N/10 mm to 5.0 N/10 mm, still more preferably from 0.1 N/10 mm to 3.0 N/10 mm. The term "initial pressure-sensitive adhesive strength AF₀" as used herein refers to a pressure-sensitive adhesive strength measured by a 180° peeling test immediately after a pressure-sensitive adhesive layer is formed on any appropriate base material, and the term "pressure-sensitive adhesive strength after storage AFₛ" as used herein refers to a pressure-sensitive adhesive strength measured by the 180° peeling test after a pressure-sensitive adhesive layer is formed on any appropriate base material and stored at 50°C for 1 week.

### B-1. Pressure-sensitive Adhesive Layer

The pressure-sensitive adhesive layers **30** and **32** are each formed of the above-mentioned hot-melt pressure-sensitive adhesive composition. The thickness of the pressure-sensitive adhesive layer is from 10 um to 100 um, preferably from 10 um to 80 um, more preferably from 15 um to 50 um. When the thickness of the pressure-sensitive adhesive layer falls within the above-mentioned ranges, there can be obtained a pressure-sensitive adhesive tape that can achieve both a resealing property and an easy unsealing property.

The pressure-sensitive adhesive layer may be formed by any appropriate method. For example, a pressure-sensitive adhesive layer may be formed by directly applying the above-mentioned hot-melt pressure-sensitive adhesive composition to a base material, or a pressure-sensitive adhesive layer may be formed on a release-treated transfer film and transferred onto a base material.

Any appropriate method may be used as a method of applying the hot-melt pressure-sensitive adhesive composition to the base material or the transfer film. For example, the hot-melt pressure-sensitive adhesive composition may be applied by using a roll coater, a knife coater, an air knife coater, a bar coater, a blade coater, a slot die coater, a lip coater, a gravure coater, or a spray coater.

### B-2. Base Material

Any appropriate base material may be used as the base material. Examples thereof include: a polyolefin-based film of polyethylene, polypropylene, or an ethylene-propylene copolymer; a polyester-based film of polyethylene terephthalate; and a plastic film such as a polyvinyl chloride film.

The plastic film may be a non-stretched film or a stretched (uniaxially stretched or biaxially stretched) film. In one embodiment, the surface of the base material on which the pressure-sensitive adhesive layer is formed may be subjected to surface treatment, such as application of an undercoat agent or corona discharge treatment. In addition, the surface of the base material on which the pressure-sensitive adhesive layer is not formed may be subjected to release treatment. Because of the release treatment, sticking between the base material and the pressure-sensitive adhesive layer in a state in which the pressure-sensitive adhesive tapes overlap each other can be prevented, and the tape can be stored in a roll form. In one embodiment, an olefin-based pressure-sensitive adhesive layer is formed as the undercoat layer **20** on the surface of the base material on which the pressure-sensitive adhesive layer is formed. When the base material, the olefin-based pressure-sensitive adhesive layer, and the above-mentioned hot-melt pressure-sensitive adhesive composition are laminated in the stated order, the anchoring failure of the pressure-sensitive adhesive tape can be suppressed.

The thickness of the base material may be set to any appropriate thickness. The thickness of the base material is, for example, from 10 um to 100 um, preferably from 30 um to 90 um, more preferably from 50 um to 80 µm.

In one embodiment, the pressure-sensitive adhesive tape can be suitably used as a sealing material for resealing. In one embodiment, the above-mentioned pressure-sensitive adhesive tape can be suitably used for a packaging material including a printed portion. The packaging material may include a printed portion in order to display required information. When the packaging material includes a printed portion, compositions of an ink used for printing and a paint (e.g., a lacquer) used for protecting a printed surface may affect the pressure-sensitive adhesive strength of the pressure-sensitive adhesive tape to increase the pressure-sensitive adhesive strength with time. As a result, the easy peeling property may not be obtained. This tendency may become more conspicuous when a nitrocellulose-based lacquer is applied to the printed surface. The pressure-sensitive adhesive tape according to the embodiment of the present invention can achieve both a resealing property and an easy unsealing property even when used for a packaging material including a printed surface to which a nitrocellulose-based lacquer is applied.

### Examples

The present invention is specifically described below by way of Examples. However, the present invention is not limited to these Examples. Evaluation methods in Examples and the like are as described below. In addition, the terms "part (s)" and "%" are "part (s) by weight" and "wt%", respectively, unless otherwise stated.

### [Examples 1 to 4 and Comparative Examples 1 to 3]

Materials shown in Table 1 were mixed to prepare pressure-sensitive adhesives 1 to 6 and an undercoat layer 1. A non-stretched PP film (thickness: 80 um) subjected to release treatment on a surface opposite to a pressure-sensitive adhesive applied surface was used as a base material. The undercoat layer and the pressure-sensitive adhesive for forming a pressure-sensitive adhesive layer were simultaneously laminated and applied to the surface of the base material not subjected to the release treatment through use of TrueCoat Slot applicator (manufactured by Nordson Corporation), to thereby provide a pressure-sensitive adhesive tape. An application temperature was 160°C, and a line speed was 100 m/min. The thickness of the undercoat layer was 15 um, and the thickness of the pressure-sensitive adhesive layer was set to the thickness shown in Table 2. The following evaluations were performed through use of the resultant pressure-sensitive adhesive tapes.

**Table 1**

| | Pressure-sensitive adhesive 1 | Pressure-sensitive adhesive 2 | Pressure-sensitive adhesive 3 | Pressure-sensitive adhesive 4 | Pressure-sensitive adhesive 5 | | | Pressure-sensitive adhesive 6 |
|---|---|---|---|---|---|---|---|---|
| Styrene-based elastomer | 42.7% | 60.0% | 51.5% | 48.2% | 32.0% | | Styrene-based elastomer | 51.5% |
| Tackifier | 51.3% | 9.0% | 8.5% | 7.5% | 5.0% | | Tackifier | 8.5% |
| Olefin-based elastomer | 0.0% | 10.0% | 20.0% | 25.1% | 50.0% | | Olefin-based resin | 20.0% |
| Oil | 4.3% | 20.0% | 19.0% | 18.1% | 12.0% | | Oil | 19.0% |
| Antioxidant | 1.7% | 1.0% | 1.0% | 1.0% | 1.0% | | Antioxidant | 1.0% |

| | | | | | | | | |
|---|---|---|---|---|---|---|---|---|
| Styrene-based thermoplastic elastomer (SIS, manufactured by Kraton Polymers Japan Ltd., product name: D1163) Olefin-based elastomer (manufactured by Exxon Mobil Corporation, product name: Vistamaxx 8780) Tackifier (hydrogenated alicyclic petroleum resin, manufactured by Kolon Industries, Inc., product name: SUKOREZ SU-100S) Oil (paraffin oil, manufactured by PETROYAG Lubricants, product name: Oyster 259) Antioxidant (manufactured by BASF Japan Ltd., product name: Irganox 1010) Olefin-based resin (crystalline random PP, manufactured by SCG Chemicals Public Company Limited, product name: P756C) | | | | | | | | |

| | Undercoat layer 1 |
|---|---|
| α-Olefin resin | 59% |
| Tackifier | 40% |
| Antioxidant | 1% |

| | |
|---|---|
| α-Olefin resin (manufactured by REXtac, LLC., product name: RT2788) Tackifier (hydrogenated alicyclic petroleum resin, manufactured by Kolon Industries, Inc., product name: SUKOREZ SU-100S) Antioxidant (manufactured by BASF Japan Ltd., product name: Irganox 1010) | |

### [Evaluations]

The tapes of Examples and Comparative Examples were each cut to a width of 10 mm to prepare a sample. Packaging materials (printed films) for packaging commercially available products were used as adherends. The printed films each had a printed surface containing a nitrocellulose-based lacquer. The printed films were each bonded to an SUS plate through use of an acrylic double-sided tape (manufactured by Nitto Denko Corporation: No. 5000NS). The pressure-sensitive adhesive layer was bonded to a surface of the printed film so that the length of a portion in which the pressure-sensitive adhesive layer and the printed film were bonded to each other was 25 mm, and the resultant was pressure-bonded by two reciprocations under a load of 2 kg. A peeling test was performed at a peel angle of 180° and a peel rate of 305 mm/min after the resultant was left to stand still at room temperature (23°C) for 30 minutes from the pressure bonding in the initial evaluation, and after the resultant was left to stand still in a constant-temperature oven set to 50°C for 1 week and then left to stand at room temperature for 2 hours in the evaluation after storage. Thus, an adhesive strength was measured. The evaluations were performed with three sample specimens, and an average value of the measurement results was adopted as the adhesive strength. A Z0.5 tensile tester manufactured by ZwickRoell Corporation was used for the measurement. When the initial pressure-sensitive adhesive strength AF₀ is from 0.1 N/10 mm to 5.0 N/10 mm, the initial pressure-sensitive adhesive strength is sufficient. When the pressure-sensitive adhesive strength after standing still at 50°C for 1 week (pressure-sensitive adhesive strength after storage AFₛ) is from 0.1 N/10 mm to 5 N/10 mm, both the resealing property and the easy unsealing property can be achieved.

**Table 2**

| | | | Example | | | | Comparative Example | | |
|---|---|---|---|---|---|---|---|---|---|
| | | | 1 | 2 | 3 | 4 | 1 | 2 | 3 |
| Pressure-sensitive adhesive layer | Composition | | Pressure-sensitive adhesive 1 | Pressure-sensitive adhesive 2 | Pressure-sensitive adhesive 3 | Pressure-sensitive adhesive 4 | Pressure-sensitive adhesive 1 | Pressure-sensitive adhesive 5 | Pressure-sensitive adhesive 6 |
| | Thickness [µm] | | 30 | 30 | 15 | 30 | 15 | 30 | 30 |
| Adhesive strength [N/10 mm] | Printed film (1) | Initial | 0.6 | 0.2 | 0.2 | 0.1 | 3.0 | Not bonded | Not bonded |
| | | After 1 week at 50°C | 4.5 | 3.4 | 3.0 | 3.9 | 5.1 | | |
| | Printed film (2) | Initial | 0.8 | 0.3 | 0.2 | 0.1 | 1.4 | Not bonded | Not bonded |
| | | After 1 week at 50°C | 3.9 | 2.4 | 2.4 | 1.6 | 8.2 | | |
| | Printed film (3) | Initial | 0.8 | 0.3 | 0.3 | 0.1 | 6.4 | Not bonded | Not bonded |
| | | After 1 week at 50°C | 4.1 | 3.5 | 3.2 | 2.3 | 6.1 | | |
| | Printed film (4) | Initial | 0.3 | 0.2 | 0.2 | 0.2 | 6.2 | Not bonded | Not bonded |
| | | After 1 week at 50°C | 4.1 | 2.6 | 2.3 | 3.5 | 6.6 | | |

| | | | | | | | | | |
|---|---|---|---|---|---|---|---|---|---|
| Printed film (1): Packaging film for food Printed film (2): Packaging film for sanitary goods Printed film (3): Packaging film for sanitary goods Printed film (4): Packaging film for surface protection | | | | | | | | | |

The pressure-sensitive adhesive tapes using the hot-melt pressure-sensitive adhesive compositions obtained in Examples 1 to 4 each had a sufficient initial pressure-sensitive adhesive strength, and an excess increase in pressure-sensitive adhesive strength was suppressed even after storage. The pressure-sensitive adhesive tape using the hot-melt pressure-sensitive adhesive composition of Comparative Example 1 had an excessively increased pressure-sensitive adhesive strength after storage, and the adherend (printed film) was deformed at the time of peeling. The pressure-sensitive adhesive tapes using the hot-melt pressure-sensitive adhesive compositions of Comparative Examples 2 and 3 were each not able to be bonded to the adherend both initially and after storage.

### Industrial Applicability

The hot-melt pressure-sensitive adhesive composition of the embodiment of the present invention and the pressure-sensitive adhesive tape using the hot-melt pressure-sensitive adhesive composition can achieve both the resealing property and the easy unsealing property. Thus, the hot-melt pressure-sensitive adhesive composition and the pressure-sensitive adhesive tape can be used as a sealing material for resealing of various packaging materials for food, daily necessities, sanitary goods, and the like. The hot-melt pressure-sensitive adhesive composition and the pressure-sensitive adhesive tape can be used as a sealing material for resealing that is also suitable for a packaging material including a printed surface.

### Reference Signs List

- **100**: pressure-sensitive adhesive tape
- **101**: pressure-sensitive adhesive tape
- **10**: base material
- **20**: undercoat layer
- **30**: pressure-sensitive adhesive layer
- **31**: pressure-sensitive adhesive layer
- **32**: pressure-sensitive adhesive layer

## Claims

1. A hot-melt pressure-sensitive adhesive composition, comprising a styrene-based elastomer, an olefin-based elastomer, and a tackifier,
wherein the hot-melt pressure-sensitive adhesive composition comprises
2 wt% to 80 wt% of the styrene-based elastomer,
2 wt% to 50 wt% of the olefin-based elastomer, and
2 wt% to 40 wt% of the tackifier.

2. The hot-melt pressure-sensitive adhesive composition according to claim 1, wherein the hot-melt pressure-sensitive adhesive composition comprises 5 wt% to 40 wt% of the olefin-based elastomer.

3. The hot-melt pressure-sensitive adhesive composition according to claim 1 or 2, wherein the olefin-based elastomer contains an α-olefin-based elastomer.

4. The hot-melt pressure-sensitive adhesive composition according to claim 3, wherein the α-olefin-based elastomer contains at least one kind selected from an ethylene-based elastomer, a propylene-based elastomer, and a 1-butene-based elastomer.

5. The hot-melt pressure-sensitive adhesive composition according to claim 4, wherein the α-olefin-based elastomer is the propylene-based elastomer.

6. The hot-melt pressure-sensitive adhesive composition according to any one of claims 3 to 5, wherein the α-olefin-based elastomer has a softening point of less than 100°C.

7. The hot-melt pressure-sensitive adhesive composition according to any one of claims 1 to 6, wherein the styrene-based elastomer has a styrene content of from 10 wt% to 25 wt%.

8. The hot-melt pressure-sensitive adhesive composition according to any one of claims 1 to 7, wherein the styrene-based elastomer contains a styrene-isoprene block copolymer.

9. The hot-melt pressure-sensitive adhesive composition according to claim 8, wherein the styrene-isoprene block copolymer contains a diblock copolymer.

10. The hot-melt pressure-sensitive adhesive composition according to claim 9, wherein the styrene-isoprene block copolymer contains 5 wt% to 70 wt% of the diblock copolymer.

11. The hot-melt pressure-sensitive adhesive composition according to any one of claims 1 to 10, wherein the hot-melt pressure-sensitive adhesive composition comprises 4 wt% to 30 wt% of the tackifier.

12. The hot-melt pressure-sensitive adhesive composition according to any one of claims 1 to 11, wherein the tackifier is a hydrogenated petroleum resin.

13. The hot-melt pressure-sensitive adhesive composition according to any one of claims 1 to 12, further comprising an oil.

14. The hot-melt pressure-sensitive adhesive composition according to claim 13, wherein the hot-melt pressure-sensitive adhesive composition comprises 5 wt% to 30 wt% of the oil.

15. The hot-melt pressure-sensitive adhesive composition according to any one of claims 1 to 14, wherein the hot-melt pressure-sensitive adhesive composition has a viscosity at 160°C of less than 50,000 mPa·s.

16. A pressure-sensitive adhesive tape, comprising a base material and a pressure-sensitive adhesive layer containing the hot-melt pressure-sensitive adhesive composition of any one of claims 1 to 15,
wherein the pressure-sensitive adhesive layer has a thickness of from 10 µm to 100 µm.

17. The pressure-sensitive adhesive tape according to claim 16, wherein the pressure-sensitive adhesive tape has an initial pressure-sensitive adhesive strength AF₀ of from 0.1 N/10 mm to 5.0 N/10 mm and a pressure-sensitive adhesive strength after storage AFₛ of from 0.1 N/10 mm to 5.0 N/10 mm.

18. The pressure-sensitive adhesive tape according to claim 16 or 17, wherein the pressure-sensitive adhesive tape is used as a sealing material for resealing.

19. The pressure-sensitive adhesive tape according to any one of claims 16 to 18, wherein the pressure-sensitive adhesive tape is used for a packaging material including a printed portion.
